# EUROPEAN PATENT SPECIFICATION

(11) **EP 0 970 644 B1**
(45) Date of publication and mention of the grant of the patent: **24.03.2010**
(21) Application number: 99112562.6
(22) Date of filing: 01.07.1999
(51) Int. Cl.: A47G 19/24

(54) **Condiment shaker**
Gewürzstreuer
Saupoudreuse pour condiments

(30) Priority: 06.07.1998 US 110579
(43) Date of publication of application: 12.01.2000
(73) Proprietor: Dart Industries Inc., Orlando, Florida 32837 (US)
(72) Inventor: Wallays, Nele, 2018 Antwerp (BE); Cautereels, Victor J.J., 2520 Ranst (BE)
(74) Representative: Barton, Matthew Thomas

(56) References cited:
- JP-U- 3 069 473
- JP-U- 57 157 283
- US-A- 1 110 383
- US-A- 1 931 088
- US-A- 2 024 920
- US-A- 2 937 793
- US-A- 3 125 260
- US-A- 3 194 455
- US-A- 4 961 521
- US-A- 5 513 776

## Description

This application relates to a condiment shaker.

Shaker dispensers for condiments such as salt and pepper are well known, as are shakers for other types of grated or comminuted foodstuffs such as cheese, coconut, nuts and the like.

The known shakers will, in most instances, include a base container with a dispensing top having multiple sprinkler or pouring apertures therein. In some instances, as in the holder of the patent of L.J. Wessel, 1,265,562, issued May 7, 1918, the discharge flow of the foodstuff may be enhanced by a paddle scraper manually manipulated by a laterally projecting knob.

US-A-5513776 discloses a shaker for granular or powdered material including one or more bosses moulded on an undercap to prevent clotting and blockage of the shaker.

It is an object of the present invention to provide a shaker which is particularly suitable for the storing and serving of comminuted foodstuffs such as grated cheese, grated coconut, finely chopped nuts, and the like.

According to one aspect of the invention, there is provided a condiment shaker for the dispensing of a food product, said shaker comprising a base container with a storage chamber and a mouth defined by an upper edge of said base container, said base container being adapted to be hand held and rotated, a wiper unit overlying said mouth, means for releasably fixing said wiper unit to said container for rotation therewith, a sprinkler top overlying said wiper unit, means for releasably mounting said sprinkler top to said container and wiper unit for rotation of said container and wiper unit relative to said sprinkler top, said sprinkler top having inner and outer faces with multiple discharge holes therethrough communicating with said chamber, said wiper unit being in wiping engagement with said inner face of said sprinkler top and moving thereacross upon rotating of said container and wiper unit relative to said sprinkler top.

According to another aspect of the invention, there is provided a discharge assembly for a condiment shaker for allowing and encouraging flow of grated and comminuted foodstuffs therefrom, said discharge assembly including a sprinkler top including a top panel having multiple openings defined therethrough and a depending collar peripherally joined to said top panel, said collar having a free lower edge, an inwardly directed rib formed on said collar in closely spaced relation below said top panel and above said lower edge of said collar; and a wiper unit comprising a peripheral skirt immediately inward of said collar and extending from said sprinkler top panel to a point in spaced relation below said sprinkler collar, a peripheral outwardly directed groove defined in said wiper unit skirt and receiving said collar rib therein for rotation of said sprinkler top and wiper unit relative to each other, said wiper unit further including a central hub and multiple wiping blades extending between said skirt and said hub, said blades being in wiping engagement with said top panel of said sprinkler top for a wiping thereof as said sprinkler top and wiper unit are rotated relative to each other.

In a preferred embodiment of the invention a dispenser is provided in which the dispensing of the foodstuff is effected through a sprinkler top with multiple apertures defined therethrough, with the discharge flow enhanced and encouraged by the shape of the apertures and by a wiper member or unit immediately underlying the sprinkler top. The assembled appearance of the condiment shaker, which includes a protective overcap to enclose the sprinkler top when the shaker is not in use, is that of a unitary aesthetically pleasing assembly with no projecting wiper manipulating components or the like. While relative rotation between the wiper member and the sprinkler top is a significant aspect of the invention, the wiper member, other than for a short portion of the peripheral skirt thereof, is concealed within the sprinkler top with the presence of the wiper member and the manner of manipulation thereof relative to the sprinkler top being neither readily discernible nor interfering with the overall appearance of the condiment shaker.

Structurally, the shaker in the preferred embodiment includes a base container, normally vertically elongate with the internal storage chamber having an upwardly opening mouth defined by an externally threaded container neck. The wiper member or unit includes a peripheral skirt with radial wiper blades extending inward from the upper portion of the skirt to a central slightly domed hub. The lower portion of the wiper skirt is outwardly offset and provided with internal threads which engage the threads on the container neck and fixedly although releasable mount the wiper unit to the container for manipulation therewith.

The perforated sprinkler top overlies the upper wiping edges of the paddles or blades and includes a depending peripheral collar, the lower edge of which generally seats on an annular shoulder defined in the outwardly offset lower portion of the wiper skirt above the lower edge thereof, thus substantially concealing the wiper unit. The sprinkler top is releasably and rotatably mounted to the wiper unit by means of an inwardly directed annular bead on the inner upper portion of the sprinkler top collar which snap-fits within an annular groove formed in the outer surface of the wiper unit skirt. Thus engaged, relative rotation between the sprinkler top and the wiper unit is achieved by merely lightly grasping the sprinkler top and the base container with opposite hands, and rotating the container, with the wiper unit fixed thereto, relative to the sprinkler top. With the shaker inverted, the foodstuff will flow between the wiper blades to and through the sprinkler top apertures assisted by the rotating blades which will eliminate any tendency for the foodstuff to clog, bridge the openings, or the like. This desired free-flowing action is further enhanced by the smooth outwardly tapering configuration of each of the apertures which progressively outwardly enlarge whereby any foodstuff passing though the inner end of each openings will freely fall from the larger outer end thereof.

The sprinkler top and wiper unit, while secure in their mounted positions, are easily removable for cleaning, refilling, and the like. The entire assembly is completed by locks to the peripheral upper portion of appropriate engaging rib and groove.

An embodiment of the invention is described below by way of example with reference to the accompanying drawings, in which:-
FIGURE 1 is a perspective view of the condiment shaker of the invention with the overcap mounted thereon;
FIGURE 2 is a top view of the shaker with the overcap partially broken away;

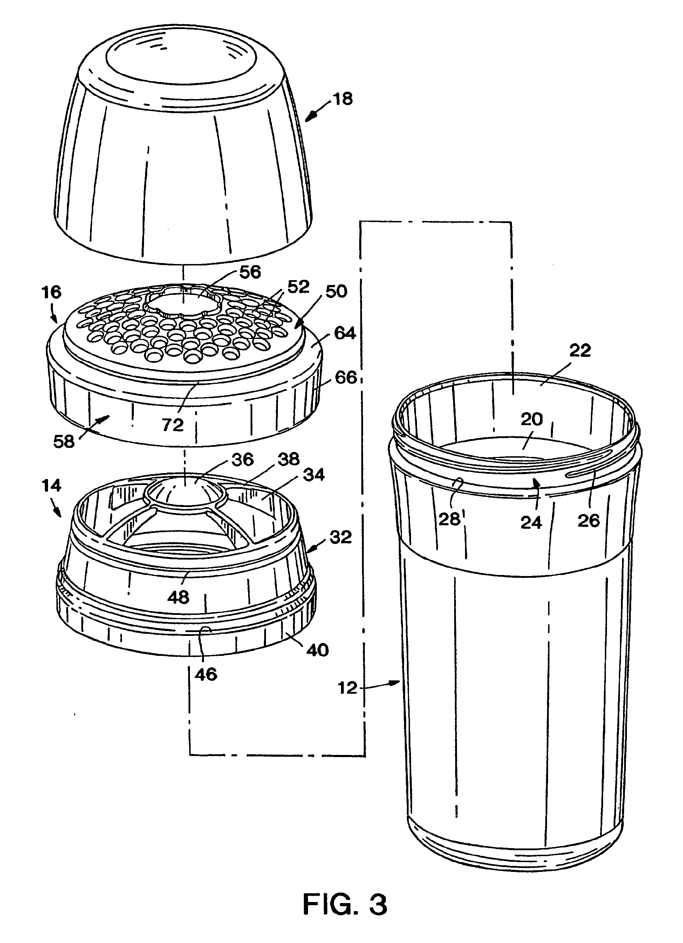

FIGURE 3 is an exploded perspective view of the separate releasably mountable components of the condiment shaker;
FIGURE 4 is a vertical cross sectional view taken substantially on a plane passing along line 4-4 in Figure 2; and
FIGURE 5 is an enlarged cross sectional detail illustrating the mounted relationship between the various components of the condiment shaker.

### DETAILED DESCRIPTION OF THE INVENTION

Referring now more specifically to the drawings, a condiment shaker 10 according to a preferred embodiment of the invention basically includes four components individually formed of an appropriate food compatible synthetic resin or resins. These components comprise a base container 12, a wiper unit 14, a sprinkler top 16, and a protective overcap 18.

The base container 12 is preferably vertically elongate defining a storage chamber 20 therein having an upwardly directed mouth 22 defined by an annular neck 24 on the container. The neck 24 includes external mounting threads 26. An upwardly directed shoulder 28 is defined immediately below the neck 24 by the upper portion of the container wall therebelow which gradually thickens outwardly to define an upper outwardly tapering wall portion. The base container 12, and more particularly the storage chamber 20 therein, has a closed bottom 30.

The wiper unit 14 includes an annular skirt 32 with integral radially inwardly extending wiper blades 34, preferably four in number and at 90 degrees of rotation relative to each other. The wiper blades 34 extend from the skirt 32 to a central upwardly domed hub 36 with the wiper blades 34 themselves, and more particularly upper wiping edges 38 thereon upwardly curving to define an arched configuration the radius of which is less than that of the hub 36.

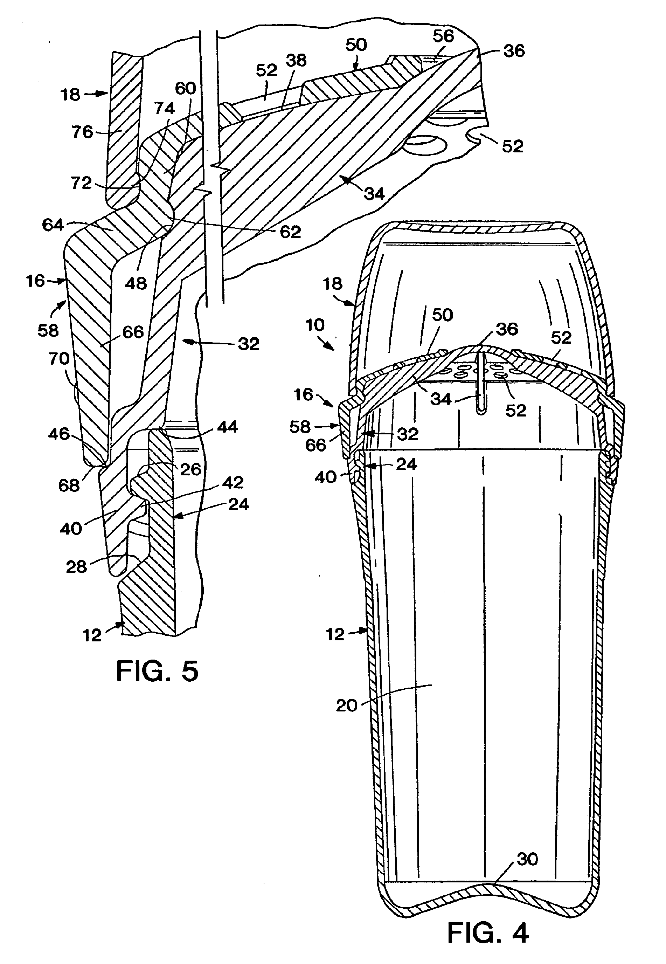

As will be noted from the cross sectional view of Figure 4, the wiper blades 34 are integral with only the upper portion of the skirt 32 with the blades being of a generally tapering configuration from a maximum height at the skirt to a minimum height at the hub 36.

The lower portion of the skirt 32 is outwardly offset and defines a mounting flange 40 which includes an inwardly directed integral screw threads 42 for a screw mounting of the wiper unit 14 to and about the neck 24. The mounting flange 40 defines a downwardly directed shoulder 44 at the upper end thereof which, upon a full mounting of the wiper unit 14, seats on the upper edge of the neck 24 in sealing relation thereto. The interior of the skirt 32, above the shoulder 44, forms a generally smooth slightly inwardly tapering continuation of the interior of the base container 12, or more particularly the chamber wall.

The skirt 32, for the mounting of the sprinkler top 16 thereto as shall be explained, further includes an outer upwardly directed annular shoulder 46 formed on the outer face of the mounting flange 40 of the skirt, and an annular locking groove 48 defined within the other face of the skirt 32 immediately below the upper edge thereof and at approximately mid-height relative to the radial outer ends of the wiper blades 34.

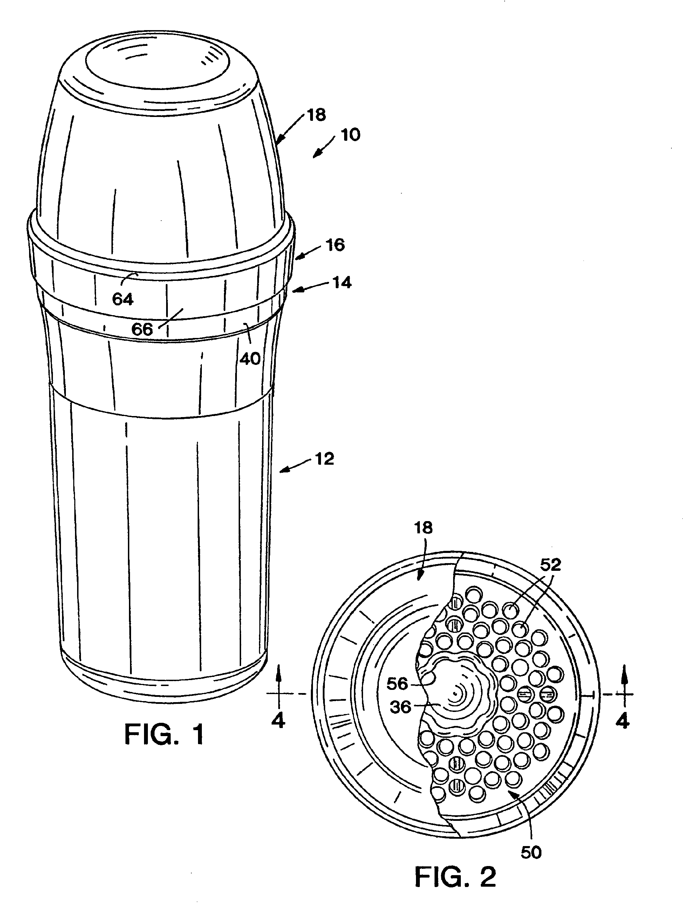

The sprinkler top 16 includes a slightly domed or upwardly arcing upper panel 50 which conforms to the arc of the upper edges of the wiper blades 34 and, when mounted, seats in engaging relation thereon. The degree of engagement between the upper wiping edges 38 of the wiper blades 34 and the undersurface of the upper panel 50 of the sprinkler top 16 being such as to wipe the undersurface of the upper panel 50 clean of any food product particles which might tend to interfere with free discharge. The actual discharge of the grated or otherwise comminuted food products is effected through multiple apertures 52 in the top panel 50. These apertures 52, as will be noted in Figure 2, are preferably arranged in concentric circles with the apertures of one annular row slightly internesting between the apertures the adjacent annular rows. Further, noting the cross sectional detail of Figure 5, each of the apertures 52 tapers outwardly to provide for a greater circular area progressively outward from the inner end of each aperture to the outer discharge end thereof. Thus, any material moving from the storage chamber 20 into the apertures will easily discharge.

The wiper blades 34, and in particular the upper wiping edges 38 thereof, while wiping about the inner surface of the upper panel 50, encourage movement of the comminuted cheese or the like through the restricted inner ends of the apertures 52, and prevent any bridging of the cheese across the inner ends of the apertures. This avoidance of bridging, in conjunction with the outward enlarging of the apertures to avoid internal bridging within the apertures as would occur with straight wall apertures, ensures the proper discharge of the material.

The center of the upper panel 50 includes a central cutout 56, which may have scalloped edges as illustrated, and is of a size as to receive the domed hub 36 of the wiper unit 14 therein and partially therethrough. Inasmuch as substantially no wiping action will occur at the center of the upper plate 50 by the wiper blades 34, this might encourage a collection and spoilage of grated cheese or the like at the center of the upper panel 50. To prevent this, any tendency of the grated cheese or the like to move to the center of the upper panel 50 is eliminated by closing off this central portion by the hub 36. In other words, the hub 36, snugly engages within the cutout 56 and against the under surface of the upper panel 50 peripherally thereabout, to ensure that any of the food product engaging the inner surface of the upper panel 50, does so only in the path of the wiper blades 34.

Noting the cross sectional details in particular, the sprinkler top 16 includes a mounting and handling collar 58 integral with the outer periphery of the upper panel 50 and depending therefrom for encircling engagement about the wiper unit 14 and skirt 32 thereof. An upper portion 60 of the collar 58 is closely received about the upper end of the skirt 32 and includes an inwardly directed arcuate annular rib 62 which snap-locks within the locking groove 48, due to inherent resiliency within the material used, for free rotating of the sprinkler top 16 relative to the wiper blades 34.

At a point substantially aligned with the annular rib 62, the collar 58 includes an integral outwardly inclined flange 64 which in turn terminates in a downward and slightly inwardly angled lower portion 66 of the collar 58. A lower edge 68 of this lower portion 66 terminates at or immediately above the shoulder 46 on the mounting flange 40 of the skirt 32. In this manner, a relatively smooth outer surface appearance is provided by the stacked components, including the upper portion of the base container 12, the exposed mounting flange 40 of the skirt 32, and the lower portion 66 of the collar 58. It will also be noted that the only intimate engagement of the sprinkler top 16 with the wiper unit 14 is at the nested upper portions thereof whereat the rib 62 is snugly yet slidably received within the locking groove 48 of the skirt 32, thereby ensuring minimal resistance to free movement between the sprinkler top 16 and wiper unit 14. In order to assist in the relative rotation between the sprinkler top 16 and wiper unit 14, as shall be explained presently, a plurality of small shallow gripping projections 70 can be provided at spaced points peripherally about the lower portion 66 of the collar 58.

In order to protect the contents of the condiment shaker during periods of non-use, the protective overcap 18 will mount over the sprinkler top 16 peripherally about the upper panel 50. This mounting is effected by a locking of the protective overcap 18 to the upper portion 60 of the collar 58 by means of an annular outwardly directed groove 72 in the upper portion 60 immediately above the flange 64. This groove 72 in turn receives an inwardly directed annular rib 74 formed on the lower edge of a skirt portion 76 of the protective overcap 18.

In use, the base container 12 of the condiment shaker is filled through the mouth 22 thereof, after which the wiper unit 14 is screw threaded onto the neck 24 of the base container, and the sprinkler top 16 is snap mounted to the wiper unit 14. Disassembly for refilling, cleaning of the components, and the like, is easily effected by first removing the sprinkler cap 16 and then unscrewing the wiper unit 14. If desired, as for merely refilling the storage chamber 20, the sprinkler cap 16 can be removed together with the wiper unit 14 by merely unscrewing the wiper unit 14 from the container neck 24.

When the comminuted or grated food product is to be dispensed, the protective overcap 18 is removed, and the base container 12 is held in one hand and inverted. The other hand grasps the collar 58 of the sprinkler top 16, and the sprinkler top and base container are rotated relative to each other, normally by rotating the base container, with the wiper unit 14 fixed thereon, relative to the sprinkler top 16. As previously noted, this will produce the desired wiping action of the upper wiping edges 38 against the inner surface of the upper panel 50, encouraging flow of the food product through the apertures 52, avoiding any tendency of the material to bridge, and the like.

In dispensing, the joined base container 12 and wiper unit 14 are preferably rotated, relative to the sprinkler top 16, so as to enhance the threaded engagement between the wiper unit 14 and the base container 12. Should rotation in the opposite direction be desired, or should one desire to use a reciprocating movement, the user can stabilize the joinder of the wiper unit 14 to the neck 24 by merely placing one finger of the hand holding the container against the exposed mounting flange 40 of the skirt 32.

While a single embodiment has been disclosed, it is to be appreciated that all obvious variations thereof, as may fall within the scope of the claims following hereinafter, are intended to be encompassed.

## Claims

1. A condiment shaker (10) for the dispensing of a food product, said shaker (10) comprising a base container (12) with a storage chamber (20) and a mouth (22) defined by an upper edge of said base container, said base container (12) being adapted to be hand held and rotated, a wiper unit (14) overlying said mouth, means for releasably fixing said wiper unit (14) to said container (12) for rotation therewith, a sprinkler top (16) overlying said wiper unit (14), means for releasably mounting said sprinkler top (16) to said container (12) and wiper unit (14) for rotation of said container (12) and wiper unit (14) relative to said sprinkler top (16), said sprinkler top (16) having inner and outer faces with multiple discharge holes (52) therethrough communicating with said chamber (20) said wiper unit (14) being in wiping engagement with said inner face of said sprinkler top (16) and moving thereacross upon rotating of said container (12) and wiper unit (14) relative to said sprinkler top (16),
**characterised in that** said wiper unit (14) comprises a circular skirt (32) with upper and lower edges, a central hub (36) in inwardly spaced relation to and coaxial with said skirt (32) and multiple wiping blades (34) extending radially between said skirt (32) and said hub (36) said wiping blades (34) each having an upper wiping edge (38) arcing inwardly and upwardly from said skirt (32) at the upper edge thereof for direct wiping engagement of said blade upper edges (38) with the overlying sprinkler (16) and wherein a top panel (50) of said sprinkler top (16) includes a central cutout (56) receiving said domed hub (36) therein and partially therethrough.

2. The condiment shaker (10) of claim 1 wherein said cutout (56) is substantially larger than the individual discharge holes (52) and closely receiving said hub (36) therethrough.

3. The condiment shaker (10) of claim 2 wherein said means for mounting said sprinkler top (16) to said container (12) and wiper unit (14) comprises an external groove (40) peripherally about said wiper unit (14) and a groove-engaging inwardly directed rib (62) on said sprinkler top (16).

4. The condiment shaker (10) of claim 3 wherein said means for fixing said wiper unit (14) to said container (12) comprises cooperating threads (26, 42) on said container (12) and said wiper unit (14).

5. The condiment shaker (10) of claim 4 including a protective overcap (18) releasably overlying and enclosing said discharge holes (52) in said sprinkler top (16).

6. The condiment (10) shaker (10) of claim 1 wherein said wiper unit skirt (32) includes a radially outwardly offset lower portion defining a downwardly directed inner shoulder seating on the upper edge of said container (12) peripherally thereabout.

7. The condiment shaker (10) of claim 6 wherein said sprinkler top (16) includes a top panel (50) through which said holes (52) are defined and an integral depending peripheral collar (58) said top panel (50) overlying said wiping blades (34) and said collar (58) encircling and enclosing said wiper unit skirt (32) downward from said top panel (50) to a point wherein said collard (58) partially overlaps said outwardly offset portion of said wiper unit skirt (32) whereby a portion of said skirt (32) below said wiping unit collard (58) remains exposed.

8. The condiment shaker (10) of claim 1 wherein said means for mounting said sprinkler top (16) to said container (12) comprise an external groove (48) peripherally about said wiper unit (14) and a groove-engaging inwardly directed rib (62) on said sprinkler top (16).

9. The condiment shaker (10) of claim 1 including a protective overcap (18) releasably overlying and enclosing said discharge holes (52) in said sprinkler top (16).

10. A discharge assembly for a condiment shaker (10) for allowing and encouraging flow of grated and comminuted foodstuffs therefrom, said discharge assembly including a sprinkler top (16) including a top panel (50) having multiple openings (52) defined therethrough and a depending collar (58) peripherally joined to said top panel (50), said collar (58) having a free lower edge, an inwardly directed rib (62) formed on said collar (58) in closely spaced relation below said top panel (50) and above said lower edge of said collar (58) and a wiper unit (14) comprising a peripheral skirt (32) immediately inward of said collar (58) and extending from said sprinkler top panel (50) to a point in spaced relation below said sprinkler collar (58), a peripheral outwardly directed groove (48) defined in said wiper unit skirt (32) and receiving said collar rib (62) therein for rotation of said sprinkler top (16) and wiper unit (14) relative to each other, said wiper unit (14) further including a central hub (36) and multiple wiping blades (34) extending between said skirt (32) and said hub (36), said blades (32) being in wiping engagement with said top panel (50) of said sprinkler top (16) for a wiping thereof as said sprinkler top (16) and wiper unit (14) are rotated relative to each other,
**characterised in that** said top panel (50) of said sprinkler top (16) includes a central cutout (56) receiving said domed hub (30) therein and partially therethrough.

11. The assembly of claim 10 wherein said top panel (50) of said sprinkler top (10) includes inner and outer faces, each of said openings (52) being of a progressively greater cross section outward from said inner face to said outer face for unencumbered discharge therethrough.

12. The assembly of claim 11 wherein said hub (36) seals said central opening (56) and defines a central rotational axis for said sprinkler top (10) and said wiper unit (14).

13. The assembly of claim 12 wherein said sprinkler top (16) is slightly upwardly domed, and said blades (34) include upper wiping edges (38) conforming to the domed configuration of said top panel (50).

14. The assembly of claim 13 wherein each of said blades (34) is of a progressively lesser height from said skirt (32) and radially inward toward said hub (36).

## Patentansprüche

1. Gewürzstreuer (10) zum Ausgeben eines Lebensmittelprodukts, der Streuer (10) umfassend einen Basisbehälter (12) mit einer Aufbewahrungskammer (20) und einer Öffnung (22), die durch einen oberen Rand des Basisbehälters definiert ist, wobei der Basisbehälter (12) dazu angepasst ist, per Hand gehalten und gedreht zu werden, eine über der Öffnung liegende Abstreifereinheit (14), Mittel zum lösbaren Fixieren der Abstreifereinheit (14) an dem Behälter (12), um mit diesem gedreht werden zu können, einen über der Abstreifereinheit (14) liegenden Streudeckel (16), Mittel zum lösbaren Befestigen des Streudeckels (16) an dem Behälter (12) und der Abstreifereinheit (14) zur Drehung des Behälters (12) und der Abstreifereinheit (14) im Verhältnis zu dem Streudeckel (16), wobei der Streudeckel (16) Innen- und Außenflächen mit mehreren durch diese verlaufende Ausgabelöcher (52) aufweist, die mit der Kammer (20) in Verbindung stehen, wobei die Abstreifereinheit (14) abstreifend in die Innenfläche des Streudeckels (16) eingreift und sich über diese hinweg bewegt, wenn der Behälter (12) und die Abstreifereinheit (14) im Verhältnis zu dem Streudeckel (16) gedreht werden,
**dadurch gekennzeichnet, dass** die Abstreifereinheit (14) umfasst: einen kreisförmigen Saum (32) mit oberem und unterem Rand, eine zentrale Nabe (36), die mit einem Abstand nach innen zu dem Saum (32) und koaxial zu diesem angeordnet ist, sowie mehrere Abstreifblätter (34), die radial zwischen dem Saum (32) und der Nabe (36) verlaufen, wobei diese Abstreifblätter (34) jeweils über eine obere Abstreifkante (38) verfügen, welche nach innen gebogen sind und von dem Saum (32) aus an dessen oberem Rand nach oben verlaufen, um einen direkten abstreifenden Eingriff der oberen Blattkanten (38) in den darüber liegenden Streudeckel (16) zu erzielen, und wobei eine Deckplatte (50) des Streudeckels (16) einen zentralen Ausschnitt (56) enthält, welcher die kuppelförmige Nabe (36) in sich und teilweise durch sich hindurch verlaufend aufnimmt.

2. Gewürzstreuer (10) gemäß Anspruch 1, wobei der Ausschnitt (56) wesentlich größer als die einzelnen Ausgabelöcher (52) ist und die Nabe (36) eng passend durch sich hindurch aufnimmt.

3. Gewürzstreuer (10) gemäß Anspruch 2, wobei die Mittel zum Befestigen des Streudeckels (16) an dem Behälter (12) und der Abstreifereinheit (14) eine äußere Rinne (40), die peripherisch um die Abstreifereinheit (14) herum verläuft, sowie eine in die Rinne eingreifende, nach innen gerichtete Rippe (62) auf dem Streudeckel (16) umfassen.

4. Gewürzstreuer (10) gemäß Anspruch 3, wobei die Mittel zum Fixieren der Abstreifereinheit (14) an dem Behälter (12) zusammenwirkende Gewinde (26, 42) des Behälters (12) und der Abstreifereinheit (14) umfassen.

5. Gewürzstreuer (10) gemäß Anspruch 4, enthaltend eine schützende Überkappe (18), welche lösbar über den Ausgabelöchern (52) in dem Streudeckel (16) angeordnet ist und diese einschließt.

6. Gewürzstreuer (10) gemäß Anspruch 1, wobei der Abstreifereinheit-Saum (32) einen radial nach außen versetzten unteren Abschnitt enthält, der einen nach unten gerichteten inneren Absatz definiert, welcher auf dem oberen Rand des Behälters (12) und peripherisch um diesen herum verlaufend aufsitzt.

7. Gewürzstreuer (10) gemäß Anspruch 6, wobei der Streudeckel (16) eine Deckplatte (50), durch welche hindurch die Löcher (52) definiert sind, sowie einen als integralen Bestandteil ausgebildeten, nach unten abstehenden peripherischen Kragen (58) enthält, wobei die Deckplatte (50) über den Abstreifblättern (34) liegt und der Kragen (58) unterhalb der Deckplatte (50) den Abstreifereinheit-Saum (32) umfasst und einschließt, und zwar bis zu einer Stelle, wo der Kragen (58) den nach außen versetzten Abschnitt des Abstreifereinheit-Saums (32) teilweise überlappt, wodurch ein Abschnitt des Saums (32) unterhalb des Abstreifereinheit-Kragens (58) freigelegt bleibt.

8. Gewürzstreuer (10) gemäß Anspruch 1, wobei die Mittel zum Befestigen des Streudeckels (16) an dem Behälter (12) eine äußere Rinne (48), die peripherisch um die Abstreifereinheit (14) herum verläuft, sowie eine in die Rinne eingreifende, nach innen gerichtete Rippe (62) auf dem Streudeckel (16) umfassen.

9. Gewürzstreuer (10) gemäß Anspruch 1, enthaltend eine schützende Überkappe (18), welche lösbar über den Ausgabelöchern (52) in dem Streudeckel (16) angeordnet ist und diese einschließt.

10. Ausgabebaugruppe für einen Gewürzstreuer (10), welche das Ausschütten von geriebenen und zerkleinerten Nahrungsmitteln aus diesem ermöglicht und unterstützt, wobei diese Ausgabebaugruppe enthält: einen Streudeckel (16) mit einer Deckplatte (50) mit mehreren durch sie hindurch verlaufenden Löchern (52) sowie einem nach unten abstehenden Kragen (58), der peripherisch mit der Deckplatte (50) verbunden ist, wobei dieser Kragen (58) eine freie untere Kante aufweist, wobei auf dem Kragen (58) eine nach innen gerichtete Rippe (62) ausgebildet ist, die mit engem Abstand unter der Deckplatte (50) und über der unteren Kante des Kragens (58) angeordnet ist, sowie eine Abstreifereinheit (14), die einen peripherischen Saum (32) unmittelbar innen von dem Kragen (58) aus gesehen umfasst, der von der Streudeckel-Deckplatte (50) aus bis zu einer Stelle verläuft, die einen Abstand unter dem Streudeckelkragen (58) aufweist, und eine peripherisch nach außen gerichtete Rinne (48) umfasst, die in dem Abstreifereinheit-Saum (32) definiert ist und die Kragenrippe (62) auf sich aufnimmt, um eine Drehung des Streudeckels (16) und der Abstreifereinheit (14) im Verhältnis zueinander zu ermöglichen, wobei die Abstreifereinheit (14) des Weiteren eine zentrale Nabe (36) und mehrere Abstreifblätter (34) enthält, die zwischen dem Saum (32) und der Nabe (36) verlaufen, wobei diese Blätter (32) abstreifend in die Deckplatte (50) des Streudeckels (16) eingreifen, um diese abzustreifen, wenn der Streudeckel (16) und die Abstreifereinheit (14) im Verhältnis zueinander gedreht werden,
**dadurch gekennzeichnet, dass** die Deckplatte (50) des Streudeckels (16) einen zentralen Ausschnitt (56) enthält, welcher die kuppelförmige Nabe (36) in sich und teilweise durch sich hindurch verlaufend aufnimmt.

11. Baugruppe gemäß Anspruch 10, wobei die Deckplatte (50) des Streudeckels (16) Innen- und Außenflächen enthält, wobei jedes der Löcher (52) von der Innenfläche aus nach außen in Richtung der Außenfläche einen zunehmend größeren Querschnitt aufweist, um eine ungehinderte Ausgabe durch diese hindurch zu ermöglichen.

12. Baugruppe gemäß Anspruch 11, wobei die Nabe (36) die zentrale Öffnung (56) versiegelt und eine zentrale Drehachse für den Streudeckel (16) und die Abstreifereinheit (14) definiert.

13. Baugruppe gemäß Anspruch 12, wobei der Streudeckel (16) leicht kuppelförmig nach oben gewölbt ist und die Blätter (34) über obere Abstreifkanten (38) verfügen, deren Form der kuppelförmigen Konfiguration der Deckplatte (50) entspricht.

14. Baugruppe nach Anspruch 13, wobei jedes der Blätter (34) von dem Saum (32) aus und radial nach innen in Richtung der Nabe (36) eine zunehmend geringere Höhe aufweist.

## Revendications

1. Un saupoudroir de condiments (10) destiné à la distribution d'un produit alimentaire, ledit saupoudroir (10) comprenant un récipient de base (12) avec une chambre de stockage (20) et une embouchure (22) définie par un rebord supérieur dudit récipient de base, ledit récipient de base (12) étant adapté de façon à être tenu à la main et pivoté, une unité d'essuyage (14) recouvrant ladite embouchure, un moyen de fixation libérable de ladite unité d'essuyage (14) audit conteneur (12) à des fins de rotation avec celui-ci, un couvercle de saupoudrage (16) recouvrant ladite unité d'essuyage (14), un moyen de montage libérable dudit couvercle de saupoudrage (16) sur lesdits conteneur (12) et unité d'essuyage (14) pour une rotation desdits conteneur (12) et unité d'essuyage (14) par rapport audit couvercle de saupoudrage (16), ledit couvercle de saupoudrage (16) possédant des faces intérieure et extérieure avec de nombreux trous de décharge (52) au travers de celles-ci communiquant avec ladite chambre (20), ladite unité d'essuyage (14) étant en contact de nettoyage avec ladite face intérieure dudit couvercle de saupoudrage (16) et se déplaçant sur celle-ci lors de la rotation desdits conteneur (12) et unité d'essuyage (14) par rapport audit couvercle de saupoudrage (16),
**caractérisé en ce que** ladite unité d'essuyage (14) comprend une ceinture circulaire (32) avec des rebords supérieur et inférieur, un moyeu central (36) en relation espacée vers l'intérieur et coaxial avec ladite ceinture (32), et plusieurs lames de nettoyage (34) s'étendant radialement entre ladite ceinture (32) et ledit moyeu (36), lesdites lames de nettoyage (34) possédant chacune un rebord de nettoyage supérieur (38) en forme arquée vers l'intérieur et vers le haut à partir de ladite ceinture (32) sur le rebord supérieur de celle-ci pour un contact de nettoyage direct desdits rebords de lame supérieurs (38) avec le couvercle de saupoudrage (16) les recouvrant et où un panneau supérieur (50) dudit couvercle de saupoudrage (16) comprend une ouverture centrale (56) recevant ledit moyeu bombé (36) dans celle-ci et partiellement au travers de celle-ci.

2. Le saupoudroir de condiments (10) selon la Revendication 1 où ladite ouverture (56) est sensiblement plus grande que les trous de décharge individuels (52) et reçoit de manière hermétique ledit moyeu (36) au travers de celle-ci.

3. Le saupoudroir de condiments (10) selon la Revendication 2 où ledit moyen de montage dudit couvercle de saupoudrage (16) sur lesdits conteneur (12) et unité d'essuyage (14) comprend une rainure externe (40) placée de manière périphérique autour de ladite unité d'essuyage (14) et un épaulement orienté vers l'intérieur et s'engageant dans la rainure (62) sur ledit couvercle de saupoudrage (16).

4. Le saupoudroir de condiments (10) selon la Revendication 3 où ledit moyen de fixation de ladite unité d'essuyage (14) audit conteneur (12) comprend des filets coopérants (26, 42) sur ledit conteneur (12) et ladite unité d'essuyage (14).

5. Le saupoudroir de condiments (10) selon la Revendication 4 comprenant un couvercle coiffant de protection (18) recouvrant de manière libérable et enfermant lesdits trous de décharge (52) dans ledit couvercle de saupoudrage (16).

6. Le saupoudroir de condiments (10) selon la Revendication 1 où ladite ceinture d'unité d'essuyage (32) comprend une partie inférieure décalée radialement vers l'extérieur définissant un épaulement intérieur orienté vers le bas placé sur le rebord supérieur dudit conteneur (12) circonférentiellement autour de celui-ci.

7. Le saupoudroir de condiments (10) selon la Revendication 6 où ledit couvercle de saupoudrage (16) comprend un panneau supérieur (50) par lequel lesdits trous (52) sont définis et un collier circulaire dépendant intégral (58), ledit panneau supérieur (50) recouvrant lesdites lames de nettoyage (34), et ledit collier (58) encerclant et enfermant ladite ceinture d'unité d'essuyage (32) vers le bas à partir dudit panneau supérieur (50) jusqu'à un point où ledit collier (58) chevauche partiellement ladite partie décalée vers l'extérieur de ladite ceinture d'unité d'essuyage (32), grâce à quoi une partie de ladite ceinture (32) placée sous ledit collier d'unité d'essuyage (58) reste exposée.

8. Le saupoudroir de condiments (10) selon la Revendication 1 où ledit moyen de montage dudit couvercle de saupoudrage (16) sur ledit conteneur (12) comprend une rainure externe (40) placée de manière périphérique autour de ladite unité d'essuyage (14) et un épaulement orienté vers l'intérieur et s'engageant dans la rainure (62) sur ledit couvercle de saupoudrage (16).

9. Le saupoudroir de condiments (10) selon la Revendication 1 comprenant un couvercle coiffant de protection (18) recouvrant de manière libérable et enfermant lesdits trous de décharge (52) dans ledit couvercle de saupoudrage (16).

10. Un ensemble de décharge pour un saupoudroir de condiments (10) destiné à permettre et à favoriser l'écoulement de denrées alimentaires râpées et broyées de celui-ci, ledit ensemble de décharge comprenant un couvercle de saupoudrage (16) comprenant un panneau supérieur (50) possédant plusieurs ouvertures (52) définies au travers de celui-ci et un collier dépendant (58) circonférentiellement raccordé audit panneau supérieur (50), ledit collier (58) possédant une bordure inférieure libre, un épaulement orienté vers l'intérieur (62) formé sur ledit collier (58) en relation étroitement espacée sous ledit panneau supérieur (50) et au-dessus de ladite bordure inférieure dudit collier (58) et une unité d'essuyage (14) comprenant une ceinture circulaire (32) immédiatement vers l'intérieur dudit collier (58) et s'étendant à partir dudit panneau supérieur de saupoudrage (50) jusqu'à un point en relation espacée placée sous ledit collier de saupoudroir (58), une rainure périphérique orientée vers l'extérieur (48) définie dans ladite ceinture d'unité d'essuyage (32) et recevant ledit épaulement de collier (62) dans celle-ci pour une rotation desdits couvercle de saupoudrage (16) et unité d'essuyage (14) l'un par rapport à l'autre, ladite unité d'essuyage (14) comprenant en outre un moyeu central (36) et plusieurs lames de nettoyage (34) s'étendant entre ladite ceinture (32) et ledit moyeu (36), lesdites lames (32) étant en contact de nettoyage avec ledit panneau supérieur (50) dudit couvercle de saupoudrage (16) pour un nettoyage de celui-ci lorsque lesdits couvercle de saupoudrage (16) et unité d'essuyage (14) sont pivotés l'un par rapport à l'autre,
**caractérisé en ce que** ledit panneau supérieur (50) dudit couvercle de saupoudrage (16) comprend une ouverture centrale (56) recevant ledit moyeu bombé (36) dans celui-ci et partiellement au travers de celui-ci.

11. L'ensemble selon la Revendication 10 où ledit panneau supérieur (50) dudit couvercle de saupoudrage (16) comprend des faces intérieure et extérieure, chacune desdites ouvertures (52) présentant une section transversale progressivement plus grande vers l'extérieur à partir de ladite face intérieure vers ladite face extérieure pour une décharge sans obstruction au travers de celle-ci.

12. L'ensemble selon la Revendication 11 où ledit moyeu central (36) scelle ladite ouverture centrale (56) et définit un axe de rotation central pour ledit saupoudroir (10) et ladite unité de nettoyage (14).

13. L'ensemble selon la Revendication 12 où ledit couvercle de saupoudrage (16) est légèrement bombé vers le haut et lesdites lames (34) comprennent des rebords de nettoyage supérieurs (38) épousant étroitement la configuration bombée dudit panneau supérieur (50).

14. L'ensemble selon la Revendication 13 où chacune desdites lames (34) présente une hauteur progressivement inférieure par rapport à ladite ceinture (32) et orientée radialement vers l'intérieur vers ledit moyeu (36).
